# EUROPEAN PATENT APPLICATION

(11) **EP 4 757 094 A1**
(43) Date of publication of application: **10.06.2026**
(21) Application number: 25183603.7
(22) Date of filing: 18.06.2025
(51) Int. Cl.: H02J 1/08, H02J 1/10, H02J 7/34, H02M 3/158

(54) **POWER CONVERSION DEVICE**

(30) Priority: 06.12.2024 TW 113147582
(71) Applicant: APh ePower Co., Ltd., Kaohsiung City 821 (TW)
(72) Inventor: WANG, Jian-Min, Kaohsiung City 821 (TW); LI, Jin-Chun, Kaohsiung City 821 (TW); HUNG, Wei-Hsiang, Kaohsiung City 821 (TW); SU, Hsiu-Hsien, Kaohsiung City 821 (TW); HUANG, Shang-Zeng, Kaohsiung City 821 (TW)
(74) Representative: Becker, Eberhard

(57) **Abstract**

A power conversion device (100) is provided. The power conversion device (100) includes an external power terminal (T1), a positive power terminal (T+), a negative power terminal (T-), a first output circuit (110), a second output circuit (120), a battery module (BM), a first conversion circuit (130), and a second conversion circuit (140). The second output circuit (120) is coupled in parallel with the first output circuit (110). The control switch (SWC) is coupled between the external power terminal (T1) and the positive power terminal (T+). The battery module (BM) is coupled between the positive power terminal (T+) and the negative power terminal (T-). When an external power (PE) at the external power terminal (T1) is insufficient, the control switch (SWC) is turned on, the battery module (BM), the first conversion circuit (130), and the first output circuit (110) form a first power loop (PP1) during a first period (TD1), and the battery module (BM) and the second conversion circuit (140) form a second power loop (PP2) during the first period (TD1).

## Description

### BACKGROUND

### Technical Field

The disclosure relates to a power device, and in particular to a power conversion device.

### Description of Related Art

In response to the demand for energy conservation, a conventional power conversion device may use renewable energy to provide output power. However, when the renewable energy is insufficient, the power conversion device cannot provide stable output power. Therefore, how to design a power conversion device that is suitable for renewable energy and can stably provide output power is one of the research focuses of persons skilled in the art.

### SUMMARY

The disclosure provides a power conversion device for stably providing an output power.

In an embodiment of the disclosure, the power conversion device includes an external power terminal, a positive power terminal, a negative power terminal, a first output circuit, a second output circuit, a battery module, a first conversion circuit, and a second conversion circuit. The second output circuit is coupled in parallel with the first output circuit. The control switch is coupled between the external power terminal and the positive power terminal. The battery module is coupled between the positive power terminal and the negative power terminal. The battery module provides a battery power to the positive power terminal. The first conversion circuit is coupled to the external power terminal, the negative power terminal, and the first output circuit. The second conversion circuit is coupled to the battery module, the positive power terminal, the negative power terminal, and the second output circuit. When an external power at the external power terminal is insufficient, the control switch is turned on, so that the first conversion circuit is coupled in parallel with the second conversion circuit, the battery module, the first conversion circuit, and the first output circuit form a first power loop during a first period, and the battery module and the second conversion circuit form a second power loop during the first period.

Based on the above, the second output circuit is coupled in parallel with the first output circuit. When the external power at the external power terminal is insufficient, the control switch is turned on. The first conversion circuit is coupled in parallel with the second conversion circuit. The battery module, the first conversion circuit, and the first output circuit form the first power loop during the first period, and the battery module and the second conversion circuit form the second power loop during the first period. In this way, when the external power at the external power terminal is insufficient, the power conversion device may provide the output power according to the battery power. In addition, the first conversion circuit is coupled in parallel with the second conversion circuit. The second output circuit is coupled in parallel with the first output circuit. Therefore, the internal impedance of the power conversion device may be reduced. In this way, the internal loss of the power conversion device may also be reduced.

### BRIEF DESCRIPTION OF THE DRAWINGS

FIG. 1 is a schematic diagram of a power conversion device according to an embodiment of the disclosure.
FIG. 2A is a schematic diagram of an operation of the power conversion device during a first period according to an embodiment of the disclosure.
FIG. 2B is a schematic diagram of an operation of the power conversion device during a second period according to an embodiment of the disclosure.
FIG. 3 is a signal timing diagram according to an embodiment of the disclosure.
FIG. 4 is a schematic diagram of an application of the power conversion device according to an embodiment of the disclosure.

### DESCRIPTION OF THE EMBODIMENTS

Some embodiments of the disclosure will be described in detail below with reference to the drawings. For the reference numerals cited in the following description, when the same reference numerals appear in different drawings, the reference numerals will be regarded as referring to the same or similar elements. The embodiments are only a part of the disclosure and do not disclose all possible implementations of the disclosure. More specifically, the embodiments are merely examples within the claims of the disclosure.

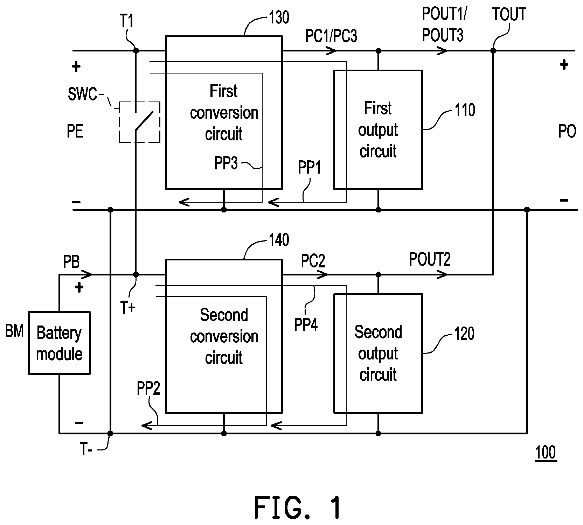

Please refer to FIG. 1. FIG. 1 is a schematic diagram of a power conversion device according to an embodiment of the disclosure. In the embodiment, a power conversion device 100 includes an external power terminal T1, an output terminal TOUT, a positive power terminal T+, a negative power terminal T-, a first output circuit 110, a second output circuit 120, a control switch SWC, a battery module BM, a first conversion circuit 130, and a second conversion circuit 140. The second output circuit 120 and the first output circuit 110 are coupled to each other in parallel. In the embodiment, a first terminal of the second output circuit 120 is coupled to a first terminal of the first output circuit 110 and the output terminal TOUT. A second terminal of the second output circuit 120 is coupled to a second terminal of the first output circuit 110 and the negative power terminal T-.

The control switch SWC is coupled between the external power terminal T1 and the positive power terminal T+. The battery module BM is coupled between the positive power terminal T+ and the negative power terminal T-. The battery module BM provides a battery power PB to the positive power terminal T+. The first conversion circuit 130 is coupled to the external power terminal T1, the negative power terminal T-, and the first output circuit 110. The second conversion circuit 140 is coupled to the battery module BM, the positive power terminal T+, the negative power terminal T-, and the second output circuit 120.

In the embodiment, when an external power PE at the external power terminal T1 is insufficient, the control switch SWC is turned on. Therefore, the first conversion circuit 130 is coupled in parallel with the second conversion circuit 140. During a period when the control switch SWC is turned on, the battery module BM, the first conversion circuit 130, and the first output circuit 110 form a first power loop PP1 during a first period. In addition, during the period when the control switch SWC is turned on, the battery module BM and the second conversion circuit 140 form a second power loop PP2 during the first period.

For example, the power conversion device 100 may determine at least one of the power, the voltage value, and the current value of the external power PE. When the at least one of the power, the voltage value, and the current value of the external power PE is lower than a corresponding preset value (for example, a preset power, a preset voltage value, or a preset current value), the power conversion device 100 may determine that the external power PE is insufficient. When the at least one of the power, the voltage value, and the current value of the external power PE is higher than or equal to the corresponding preset value, the power conversion device 100 may determine that the external power PE is sufficient.

It is worth mentioning here that the second output circuit 120 is coupled in parallel with the first output circuit 110. When the external power PE at the external power terminal T1 is insufficient, the control switch SWC is turned on. The first conversion circuit 130 is coupled in parallel with the second conversion circuit 140. The battery module BM, the first conversion circuit 130, and the first output circuit 110 form the first power loop PP1 during the first period, and the battery module BM and the second conversion circuit 140 form the second power loop PP2 during the first period. In this way, when the external power PE is insufficient, the power conversion device 100 may provide an output power PO according to the battery power PB. In addition, in a case where the first conversion circuit 130 is coupled in parallel with the second conversion circuit 140 and the second output circuit 120 is coupled in parallel with the first output circuit 110, the internal impedance of the power conversion device 100 may be reduced. In this way, the internal loss of the power conversion device 100 may also be reduced.

In the embodiment, when the external power PE is insufficient, during the period when the control switch SWC is turned on, the battery module BM and the first conversion circuit 130 form a third power loop PP3 during a second period. The battery module BM, the second conversion circuit 140, and the second output circuit 120 form a fourth power loop PP4 during the second period. In the embodiment, the second period and the first period alternate with each other.

During the first period, the battery power PB in the first power loop PP1 is provided to the first conversion circuit 130 via the positive power terminal T+ and the external power terminal T1. The first conversion circuit 130 provides a first power PC1 according to the battery power PB, and provides the first power PC1 to the first output circuit 110. The first output circuit 110 stores the first power PC1, and provides a first output power POUT1 according to the first power PC1.

During the first period, the battery power PB in the second power loop PP2 is provided to the second conversion circuit 140 via the positive power terminal T+. The second conversion circuit 140 does not provide a second power PC2 according to the battery power PB during the first period. In addition, during the first period, the second output circuit 120 provides a second output power POUT2 according to the power stored previously (that is, during the second period).

It should be noted that the first output circuit 110 provides the first output power POUT 1 to the output terminal TOUT during the first period. The second output circuit 120 provides the second output power POUT2 to the output terminal TOUT during the first period. Therefore, when the external power PE is insufficient, the output power PO output by the power conversion device 100 during the first period is the sum of the first output power POUT1 and the second output power POUT2.

During the second period, the battery power PB in the third power loop PP3 is provided to the first conversion circuit 130 via the positive power terminal T+ and the external power terminal T1. The first conversion circuit 130 does not provide the first power PC1 according to the battery power PB during the second period. In addition, during the second period, the first output circuit 110 provides the first output power POUT1 according to the power stored previously (that is, during the first period).

During the second period, the battery power PB in the fourth power loop PP4 is provided to the second conversion circuit 140 via the positive power terminal T+. The second conversion circuit 140 provides the second power PC2 according to the battery power PB, and provides the second power PC2 to the second output circuit 120. The second output circuit 120 stores the second power PC2, and provides the second output power POUT2 according to the second power PC2.

It should be noted that the first output circuit 110 provides the first output power POUT 1 to the output terminal TOUT during the second period. The second output circuit 120 provides the second output power POUT2 to the output terminal TOUT during the second period. Therefore, when the external power PE is insufficient, the power output by the power conversion device 100 during the second period is the sum of the first output power POUT1 and the second output power POUT2.

In the embodiment, when the external power PE is sufficient, the control switch SWC is turned off. In addition, when the external power PE is sufficient, the first conversion circuit 130 may provide a third power PC3 according to the external power PE. The first output circuit 110 also uses the third power PC3 to provide a third output power POUT3. Therefore, the third output power POUT3 is the output power PO. In addition, the second conversion circuit 140 also uses the third output power POUT3 to charge the battery module BM.

In the embodiment, the external power PE is generated by renewable energy. For example, the renewable energy may be energy generated by a power generation manner such as wind power generation, photovoltaic power generation, and tidal power generation.

In the embodiment, the first conversion circuit 130 may be a boost converter. The second conversion circuit 140 may be a bidirectional power converter. In the embodiment, the control switch SWC may be implemented by any form of transistor switch or relay.

The battery module BM may be an aluminum ion battery, a lithium battery, or other power storage elements known to persons skilled in the art.

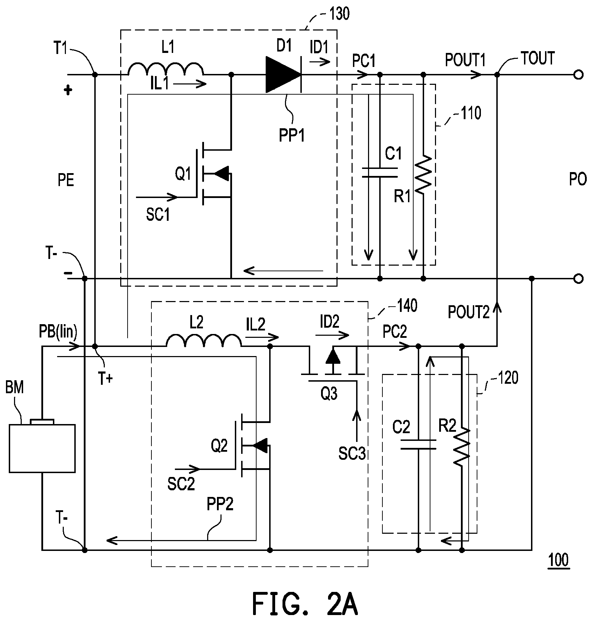

Please refer to FIG. 1 and FIG. 2A. FIG. 2A is a schematic diagram of an operation of the power conversion device during a first period according to an embodiment of the disclosure. In the embodiment, when the external power PE is insufficient, the control switch SWC is turned on. The external power terminal T1 is connected to the positive power terminal T+. In the embodiment, the first conversion circuit 130 includes an inductor L1, a diode D1, and a power switch Q1. A first terminal of the inductor L1 is coupled to the external power terminal T1. An anode of the diode D1 is coupled to a second terminal of the inductor L1. A cathode of the diode D1 is coupled to the first terminal of the first output circuit 110 and the first terminal of the second output circuit 120. A first terminal of the power switch Q1 is coupled to the anode of the diode D1. A second terminal of the power switch Q1 is coupled to the second terminal of the first output circuit 110, the second terminal of the second output circuit 120, and the negative power terminal T-.

The first output circuit 110 includes a capacitor C1 and a resistor R1. The capacitor C1 is coupled between the first terminal of the first output circuit 110 and the second terminal of the first output circuit 110. In other words, the capacitor C1 is coupled between the output terminal TOUT and the negative power terminal T-. The resistor R1 is coupled between the first terminal of the first output circuit 110 and the second terminal of the first output circuit 110. In other words, the resistor R1 is coupled in parallel with the capacitor C1.

The second conversion circuit 140 includes an inductor L2 and power switches Q2 and Q3. A first terminal of the inductor L2 is coupled to the positive power terminal T+. A first terminal of the power switch Q2 is coupled to a second terminal of the inductor L2. A second terminal of the power switch Q2 is coupled to the first terminal of the first output circuit 110 and the first terminal of the second output circuit 120. A first terminal of the power switch Q3 is coupled to the second terminal of the inductor L2. A second terminal of the power switch Q3 is coupled to the second terminal of the first output circuit 110, the second terminal of the second output circuit 120, and the negative power terminal T-.

In the embodiment, the power switch Q1 performs a switching operation according to a control signal SC1. The power switch Q2 performs a switching operation according to a control signal SC2. The power switch Q3 performs a switching operation according to a control signal SC3. In the embodiment, the power switches Q1 and Q2 are respectively implemented by an N-type transistor, but the disclosure is not limited thereto. The power switch Q3 is implemented by a P-type transistor, but the disclosure is not limited thereto.

In the embodiment, the control signals SC1, SC2, and SC3 may be respectively provided by a controller (not shown). In addition, the control switch SWC may be controlled by the controller.

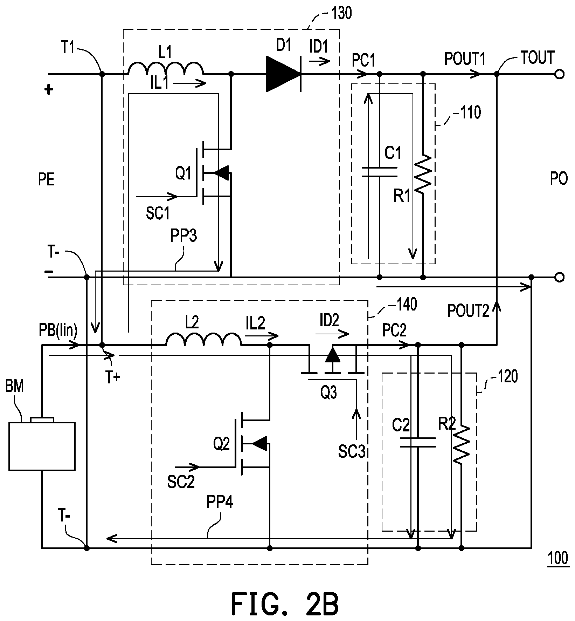

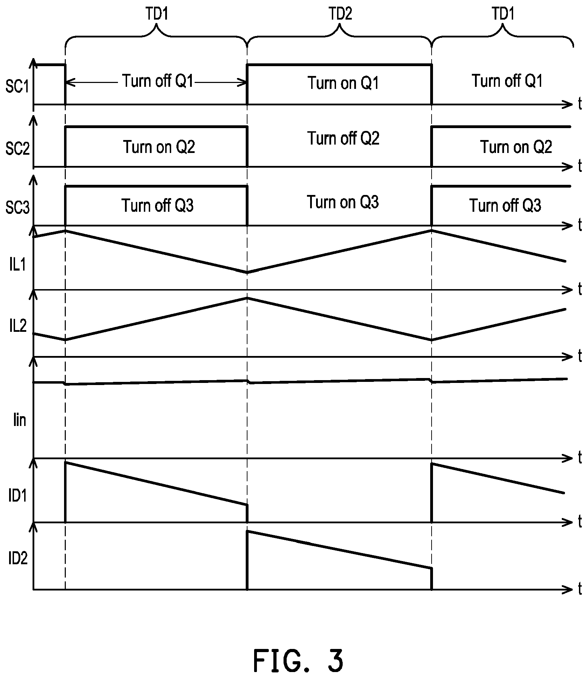

Please refer to FIG. 1, FIG. 2A, FIG. 2B, and FIG. 3. FIG. 2B is a schematic diagram of an operation of the power conversion device during a second period according to an embodiment of the disclosure. FIG. 3 is a signal timing diagram according to an embodiment of the disclosure. In the embodiment, FIG. 3 shows a signal timing diagram during a first period TD1 and a second period TD2. The power switches Q1 and Q2 are respectively implemented by an N-type transistor. The power switch Q3 is implemented by a P-type transistor. When the external power PE is insufficient, the control switch SWC is turned on. During the first period TD1 in the time interval in which the control switch SWC is turned on, the control signal SC1 has a low voltage level. The control signals SC2 and SC3 have a high voltage level. The power switch Q2 is turned on. The power switches Q1 and Q3 are turned off. Based on the power switch Q1 being turned off, the power stored in the inductor L1 flows to the first output circuit 110 via the diode D1. The inductor L1 releases energy. Therefore, the current value of a first current IL1 flowing through the inductor L1 gradually decreases during the first period TD1. The current value of a current ID1 flowing through the diode D1 also gradually decreases. During the first period TD1, the first conversion circuit 130 converts the battery power PB into the first power PC1.

In addition, during the first period TD1, based on the power switch Q3 being turned off and the power switch Q2 being turned on, the inductor L2 uses the battery power PB to store energy. Therefore, the current value of a second current IL2 flowing through the inductor L2 gradually increases during the first period TD1.

The current value of a battery current Iin of the battery power PB is equal to the sum of the current value of the first current IL1 and the current value of the second current IL2. It should be noted that the current value of the first current IL1 gradually decreases during the first period TD1. The current value of the second current IL2 gradually increases during the first period TD1. Therefore, the ripple of the battery current Iin during the first period TD1 may be reduced.

During the first period TD1, the first output circuit 110 uses the capacitor C1 to store the first power PC1. The first output circuit 110 provides the first output power POUT1 according to the first power PC1. During the first period TD1, the second output circuit 120 uses the power stored in the capacitor C2 during the second period TD2 to provide the second output power POUT2.

During the second period TD2 in the time interval in which the control switch SWC is turned on, the control signal SC1 has a high voltage level. The control signals SC2 and SC3 have a low voltage level. The power switch Q2 is turned off. The power switches Q1 and Q3 are turned on. Based on the power switch Q1 being turned on, the inductor L1 uses the battery power PB to store energy. Therefore, the current value of the first current IL1 flowing through the inductor L1 gradually increases during the second period TD2. The current value of the current ID1 flowing through the diode D1 is equal to 0. In addition, during the second period TD2, based on the power switch Q3 being turned on and the power switch Q2 being turned off, the power stored in the inductor L2 flows to the second output circuit 120 via the power switch Q3. The inductor L2 releases energy. Therefore, the current value of the second current IL2 flowing through the inductor L2 gradually decreases during the second period TD2. The current value of a current ID2 flowing through the power switch Q3 also gradually decreases. During the second period TD2, the second conversion circuit 140 converts the battery power PB into the second power PC2.

It should be noted that the current value of the first current IL1 gradually increases during the second period TD2. The current value of the second current IL2 gradually decreases during the second period TD2. Therefore, the ripple of the battery current Iin during the second period TD2 may also be reduced.

During the second period TD2, the second output circuit 120 uses the capacitor C2 to store the second power PC2. The second output circuit 120 provides the second output power POUT2 according to the second power PC2. During the second period TD2, the first output circuit 110 uses the power stored in the capacitor C1 during the first period TD1 to provide the first output power POUT 1.

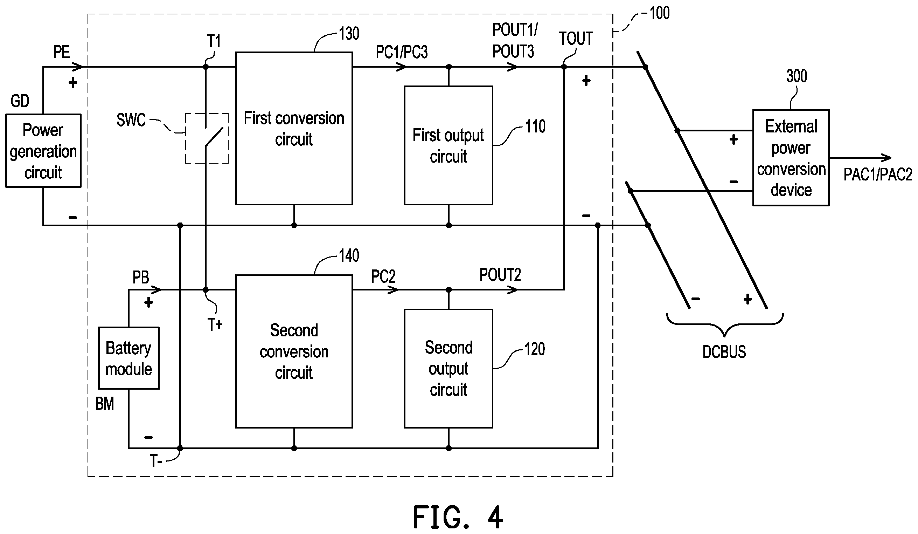

Please refer to FIG. 4. FIG. 4 is a schematic diagram of an application of the power conversion device according to an embodiment of the disclosure. In the embodiment, the power conversion device 100 may be disposed between a power generation circuit GD and a direct current power bus DCBUS. The power generation circuit GD provides the external power PE. The power generation circuit GD may be a power grid or a power generation device for providing the renewable energy. When the external power PE is sufficient, the control switch SWC is turned off. When the external power PE is sufficient, the first conversion circuit 130 may provide the third power PC3 according to the external power PE. The first output circuit 110 provides the third output power POUT3 according to the third power PC3, and provides the third output power POUT3 to the direct current power bus DCBUS. An external power conversion device 300 converts the third output power POUT3 into an alternating current power PAC1, and provides the alternating current power PAC1 to a load (not shown).

In addition, when the power of the external power PE is greater than the power required by the load, the first conversion circuit 130 may provide the first power PC1 according to the external power PE. The second conversion circuit 140 uses the first power PC1 to charge the battery module BM.

In addition, when the power of the external power PE is sufficient and less than the power required by the load, the first conversion circuit 130 may provide the first power PC1 according to the external power PE. The second conversion circuit 140 may provide the second power PC2 according to the battery module BM, and provide the second output power POUT2 to the direct current power bus DCBUS.

When the external power PE has no energy output (that is, is insufficient), the control switch SWC is turned on. The connection between the power conversion device 100 and the power generation circuit GD is turned off. The power conversion device 100 uses the battery power PB to provide the first output power POUT1 and the second output power POUT2, and provides the first output power POUT 1 and the second output power POUT2 to the direct current power bus DCBUS. The external power conversion device 300 converts the first output power POUT1 and the second output power POUT2 into an alternating current power PAC2, and provides the alternating current power PAC2 to the load.

In summary, the second output circuit is coupled in parallel with the first output circuit. When the external power at the external power terminal is insufficient, the control switch is turned on. The first conversion circuit is coupled in parallel with the second conversion circuit. The battery module, the first conversion circuit, and the first output circuit form the first power loop during the first period, and the battery module and the second conversion circuit form the second power loop during the first period. In this way, when the external power is insufficient, the power conversion device may provide the output power according to the battery power. In the case where the first conversion circuit is coupled in parallel with the second conversion circuit and the second output circuit is coupled in parallel with the first output circuit, the internal impedance of the power conversion device may be reduced. In this way, the internal loss of the power conversion device may also be reduced. Furthermore, the ripple of the battery current of the battery power may be reduced.

Although the disclosure has been disclosed in the above embodiments, the embodiments are not intended to limit the disclosure. Persons skilled in the art may make some changes and modifications without departing from the spirit and scope of the disclosure. Therefore, the protection scope of the disclosure shall be defined by the appended claims.

## Claims

1. A power conversion device (100), comprising:
an external power terminal (T1);
a positive power terminal (T+);
a negative power terminal (T-);
a first output circuit (110);
a second output circuit (120), coupled in parallel with the first output circuit (110);
a control switch (SWC), coupled between the external power terminal (T1) and the positive power terminal (T+);
a battery module (BM), coupled between the positive power terminal (T+) and the negative power terminal (T-) and configured to provide a battery power (PB) to the positive power terminal (T+);
a first conversion circuit (130), coupled to the external power terminal (T1), the negative power terminal (T-), and the first output circuit (110); and
a second conversion circuit (140), coupled to the battery module (BM), the positive power terminal (T+), the negative power terminal (T-), and the second output circuit (120),
wherein when an external power (PE) at the external power terminal (T1) is insufficient, the control switch (SWC) is turned on, so that the first conversion circuit (130) is coupled in parallel with the second conversion circuit (140), the battery module (BM), the first conversion circuit (130), and the first output circuit (110) form a first power loop (PP1) during a first period (TD1), and the battery module (BM) and the second conversion circuit (140) form a second power loop (PP2) during the first period (TD1).

2. The power conversion device (100) according to claim 1, wherein when the external power (PE) is sufficient, the control switch (SWC) is turned off.

3. The power conversion device (100) according to claim 1, wherein when the external power (PE) is insufficient:
the battery module (BM) and the first conversion circuit (130) form a third power loop (PP3) during a second period (TD2),
the battery module (BM), the second conversion circuit (140), and the second output circuit (120) form a fourth power loop (PP4) during the second period (TD2),
wherein the second period (TD2) and the first period (TD1) alternate with each other.

4. The power conversion device (100) according to claim 3, wherein the first conversion circuit (130) comprises:
a first inductor (L1, L2), wherein a first terminal of the first inductor (L1, L2) is coupled to the external power terminal (T1);
a diode (D1), wherein an anode of the diode (D1) is coupled to a second terminal of the first inductor (L1, L2), a cathode of the diode (D1) is coupled to a first terminal of the first output circuit (110) and a first terminal of the second output circuit (120); and
a first power switch (Q1, Q2, Q3), wherein a first terminal of the first power switch (Q1, Q2, Q3) is coupled to the anode of the diode (D1), and a second terminal of the first power switch (Q1, Q2, Q3) is coupled to a second terminal of the first output circuit (110), a second terminal of the second output circuit (120), and the negative power terminal (T-).

5. The power conversion device (100) according to claim 4, wherein the first output circuit (110) comprises:
a first capacitor (C1, C2), coupled between the first terminal of the first output circuit (110) and the second terminal of the first output circuit (110); and
a first resistor (R1, R2), coupled between the first terminal of the first output circuit (110) and the second terminal of the first output circuit (110).

6. The power conversion device (100) according to claim 4, wherein the second conversion circuit (140) comprises:
a second inductor (L1, L2), wherein a first terminal of the second inductor (L1, L2) is coupled to the positive power terminal (T+);
a second power switch (Q1, Q2, Q3), wherein a first terminal of the second power switch (Q1, Q2, Q3) is coupled to a second terminal of the second inductor (L1, L2), and a first terminal of the second power switch (Q1, Q2, Q3) is coupled to the second terminal of the first output circuit (110) and the first terminal of the second output circuit (120); and
a third power switch (Q1, Q2, Q3), wherein a first terminal of the third power switch (Q1, Q2, Q3) is coupled to the second terminal of the second inductor (L1, L2), and a second terminal of the third power switch (Q1, Q2, Q3) is coupled to the second terminal of the first output circuit (110), the second terminal of the second output circuit (120), and the negative power terminal (T-).

7. The power conversion device (100) according to claim 6, wherein the first output circuit (110) comprises:
a second capacitor (C1, C2), coupled between the first terminal of the second output circuit (120) and the second terminal of the second output circuit (120); and
a second resistor (R1, R2), coupled between the first terminal of the second output circuit (120) and the second terminal of the second output circuit (120).

8. The power conversion device (100) according to claim 6, wherein during the first period (TD1):
the first power switch (Q1, Q2, Q3) and the third power switch (Q1, Q2, Q3) are turned off, and
the second power switch (Q1, Q2, Q3) is turned on.

9. The power conversion device (100) according to claim 6, wherein during the first period (TD1):
a current value of a first current (IL1) flowing through the first inductor (L1, L2) gradually decreases, and
a current value of a second current (IL2) flowing through the second inductor (L1, L2) gradually increases.

10. The power conversion device (100) according to claim 6, wherein during the second period (TD2):
the first power switch (Q1, Q2, Q3) and the third power switch (Q1, Q2, Q3) are turned on, and
the second power switch (Q1, Q2, Q3) is turned off.

11. The power conversion device (100) according to claim 6, wherein during the second period (TD2):
a current value of a first current (IL1) flowing through the first inductor (L1, L2) gradually increases, and
a current value of a second current (IL2) flowing through the second inductor (L1, L2) gradually decreases.

12. The power conversion device (100) according to claim 3, wherein during the first period (TD1):
the first conversion circuit (130) provides a first power (PC1) according to the battery power (PB), and
the first output circuit (110) stores the first power (PC1), and provides a first output power (POUT1) according to the first power (PC1).

13. The power conversion device (100) according to claim 12, wherein during the second period (TD2):
the first output circuit (110) provides the first output power (POUT1) according to a power stored during the first period (TD1).

14. The power conversion device (100) according to claim 3, wherein during the second period (TD2):
the second conversion circuit (140) provides a second power (PC2) according to the battery power (PB), and
the second output circuit (120) stores the second power (PC2), and provides a second output power (POUT2) according to the second power (PC2).

15. The power conversion device (100) according to claim 14, wherein during the first period (TD1):
the second output circuit (120) provides the second output power (POUT2) according to a power stored during the second period (TD2).

16. The power conversion device (100) according to claim 1, when a power of the external power (PE) is sufficient and less than a power required by a load, the first conversion circuit (130) provides a first power (PC1) according to the external power (PE), and the second conversion circuit (140) provides a second power (PC2) according to the battery power (PB).

17. The power conversion device (100) according to claim 1, wherein the external power (PE) is generated by a renewable energy.
